**Europäisches Patentamt**

**European Patent Office**

**Office européen des brevets**

(19)

(11) Veröffentlichungsnummer: **0 334 144**
**A2**

(12) **EUROPÄISCHE PATENTANMELDUNG**

(21) Anmeldenummer: **89104369.7**

(22) Anmeldetag: **11.03.89**

(51) Int. Cl.⁴: **A47B 13/08 , A47B 31/06**

(30) Priorität: **25.03.88 DE 8804030 U**

(43) Veröffentlichungstag der Anmeldung:
**27.09.89 Patentblatt 89/39**

(84) Benannte Vertragsstaaten:
**DE FR GB IT NL**

(71) Anmelder: **ROLF RODEHAU GMBH u. CO. KG**
**Metallwarenfabrik**
**Moselstrasse 3**
**D-6070 Langen(DE)**

(72) Erfinder: **Kratochwil, Rudolf**
**An der Flurscheid 37**
**D-6380 Bad Homburg - Obereschbach(DE)**

(54) Servierwagen für Verkehrsmittel.

(57) Kastenförmiger Servierwagen (1), insbesondere Servierwagen für Verkehrsflugzeuge, Eisenbahnen oder Schiffe mit einer tablettartig gestalteten oberen Ablagefläche (2) und/oder mit einer herausziehbaren Tischplatte (5). Die tablettartige Ablagefläche bzw. die herausziehbare Tischplatte ist mit einem umlaufenden Rand (3) versehen und innerhalb des umlaufenden Randes (3) mit einem im drucklosen Gießverfahren kalt aufgebrachten und anschließend ausgehärteten Elastomer (4) beschichtet.

Fig. 1

EP 0 334 144 A2

## Servierwagen für Verkehrsmittel

Die Erfindung bezieht sich auf einen kastenförmigen Servierwagen gemäß Oberbegriff des Anspruches 1.

Bei diesen Servierwagen wird die obere Fläche bzw. eine herausziehbare Tischplatte zum Abstellen von Geschirr oder anderen Speisebehältnissen genutzt. Werden die Servierwagen nun speziell in Verkehrsfahrzeugen, wie Flugzeuge, Eisenbahn oder Schiffe, eingesetzt, so kommt es durch Veränderung von Beschleunigungs- bzw. Verzögerungskräften und durch unterschiedliche Schräglagen der Verkehrsmittel immer wieder zum Rutschen der abgestellten Dinge. Hier hat man versucht, Abhilfe zu schaffen, z.B. durch aufgeklebte Antirutschfolien oder durch Aufrauhen der Oberflächen. Diese Methoden sind jedoch unbefriedigend, da insbesondere beim Reinigen der Servierwagen mit Hochdruckreinigern sich Folien und Auflagen ablösen. Ferner führen eingeklebte Folien oder aufgerauhte Oberflächen häufig zu Bakterienanhäufungen im Kantenbereich.

Es ist deshalb Aufgabe der Erfindung, einen Servierwagen der eingangs genannten Art mit erheblich verbesserter Antirutscheigenschaft bei Berücksichtigung hygienischer Anforderungen, insbesondere aus dem Lebensmittelbereich, anzugeben. Diese Aufgabe wird erfindungsgemäß durch die im Kennzeichen des Anspruches 1 angegebenen Mittel gelöst.

Die mit der Neuerung erzielten Vorteile sind insbesondere: Die Beschichtung läßt sich auf einfache Art durch druckloses Ausgießen der jeweiligen Flächen herstellen, wobei der umlaufende Rand als Begrenzung für das sich ausbreitende Gießmaterial dient. Beim anschließenden Aushärten wird das Gießmaterial bei beginnender Vernetzung sehr dünnflüssig, was zu einer gleichmäßigen Verteilung mit homogener Oberfläche und zu einem glatten Abschluß an den Rändern führt. Zur besseren Haftung zwischen Trägerschicht und Elastomer kann ein Haftvermittler zwischen beiden Schichten vorgesehen werden.

Als besonders zweckmäßig hat sich Polyester-Polyurethan-Elastomer erwiesen. Bei diesem Material läßt sich insbesondere die die Antirutscheigenschaft bestimmende Shore-Härte gut einstellen. Es kann also eine Oberfläche mit sehr weicher Oberflächenhärte erzeugt werden. Ferner läßt sich das Material unterschiedlich einfärben, und es kann auch der Glänzungsgrad der Oberfläche unterschiedlich ausgeführt werden. Das Material wird den einschlägigen Lebensmittelvorschriften gerecht und erfüllt speziell die Brandvorschriften des Luftfahrtbereiches.

Da beim Aushärten des Elastomers mit Temperaturen über 100° gearbeitet werden muß, kann es zweckmäßig sein, als Trägerschicht eine metallische Schicht, z.B. Aluminium oder Edelstahl, vorzusehen, wobei dann - wie oben angegeben - ein Haftvermittler zwischen Trägerschicht und Elastomer vorgesehen werden sollte.

Neben dem Ausgießen der durch den umlaufenden Rand begrenzten Stellfläche wäre auch denkbar, eine plane Platte durch Eintauchen in elastomeres Gießmaterial allseitig zu beschichten. Lediglich beim Aushärten würden sich dann an den Auflagepunkten oder -flächen Abzeichnungen ergeben.

Erwähnt sei ferner, daß der vorgenannte Polyester-Polyurethan-Elastomer eine sehr lange Topfzeit hat, so daß sich eine lunkerfreie und blasenfreie Oberfläche ausbilden kann. Weiter wichtig ist, daß die Vernetzung, die bei diesem speziellen Material bei ca. 115° C beginnt, einhergeht mit einer zusätzlichen Anhebung der Dünnflüssigkeit, so daß sich das Material gut und gleichmäßig über die auszugießende Fläche verteilen kann. Dies ist insbesondere deswegen notwendig, damit das Material gleichmäßig gegen den Rand rinnen kann und dort eine saubere Abschlußkante bildet. Diese Kante gibt den Bakterien keinerlei Möglichkeit, eine Brutstätte auszubreiten. Würde man z.B. bei einer schrägen Kante eine Folie einkleben, so ergäbe sich hier ein kleines Dreieck, in dem sich Bakterien im Laufe der Zeit bilden und ansammeln könnten.

Eine weitere wichtige Eigenschaft des Materials ist die, daß es in sehr geringen Shorehärten eingestellt werden kann. Dies ist insbesondere bei einem Antirutsch-Belag notwendig. Teile, wie z.B. Unterteller, haben eine gute Eintauchtiefe in das Material, so daß eine Art Saugeffekt entsteht. Bei planen Flächen, die transportiert werden sollen, tritt der sogenannte Glasscheibeneffekt auf, der ebenfalls eine sehr gute Haftung vermittelt. Hier addiert sich also dieser Effekt zu dem guten Reibwert von Elastomeren. Versuche mit anderen, einfachen klassischen Zweikomponenten-Elastomeren haben ergeben, daß derartig niedrige Shorehärten nicht zu erreichen sind.

Weiterhin wichtig ist, daß das Material den normalen täglichen Beanspruchungen im Servierbereich standhält. Dies ist ebenfalls durch die Zähigkeit des Materials gegeben. Sollte es dennoch zu einer Beschädigung kommen, so läßt sich durch thermische Vernichtung des Haftvermittlers relativ leicht der elastomere Belag entfernen und erneuern, so daß auch hier eine gute Service-Freundlichkeit gegeben ist.

Desweiteren kann dieses Material schwer entflammbar und selbstverlöschend ausgerüstet werden, so daß es auch den bis heute gültigen Bestimmungen für Luftfahrtgeräte und im Automobilbereich entspricht.

Figur 1 zeigt als Ausführungsbeispiel der Neuerung einen Servierwagen,

Figur 2 zeigt einen Querschnitt der tablettartigen Ablagefläche und

Figur 3 eine Randgestaltung im Detail.

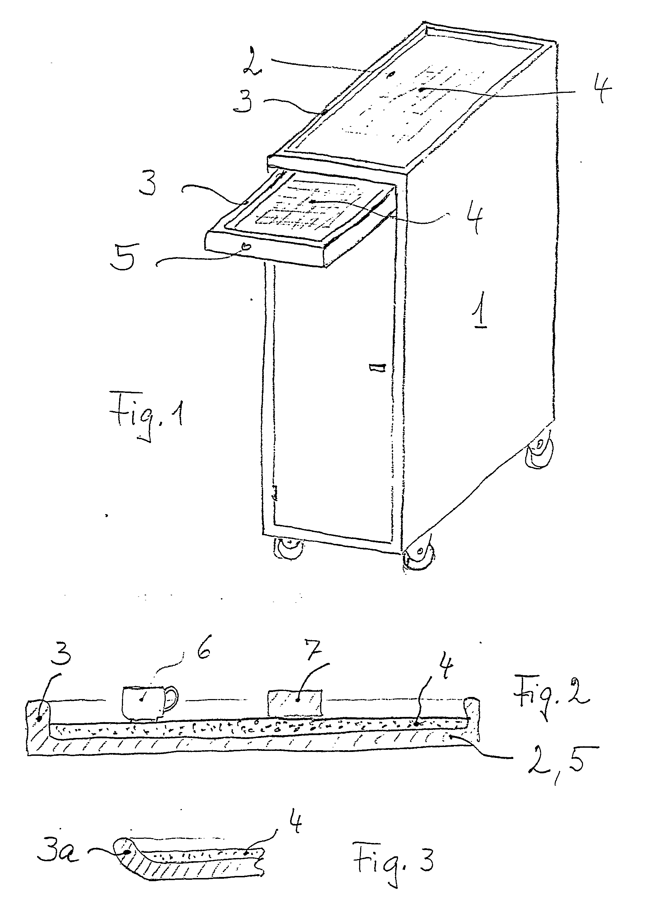

Wie insbesondere aus Figur 1 hervorgeht, ist der Servierwagen 1 an seiner oberen Ablagefläche 2 mit einem umlaufenden Rand 3 versehen. In die somit vorhandene Vertiefung ist der Elastomer eingegossen, der infolge der im Aushärtungsprozess durchlaufenen Phase der Dünnflüssigkeit zu einer gleichmäßigen Schicht 4 an der Oberfläche geführt hat. Diese Schicht 4 bildet einen sauberen Abschluß am umlaufenden Rand 3 oder 3a, und zwar unabhängig, ob der Rand, wie in Figur 2 dargestellt, kantig ausgeführt oder gemäß Figur 3 schräg ausgeführt wird. Die Schicht 4 bildet den Antirutschbelag für das darauf abgestellte Geschirr 6, 7.

Der Servierwagen 1 ist ferner mit einer herausziehbaren Tischplatte 5 ausgerüstet. Diese Tischplatte 5 besitzt an ihrer Oberseite ebenfalls einen umlaufenden Rand 3 und ist im übrigen auf gleiche Weise - wie zuvor beschrieben -mit dem Elastomer beschichtet.

## Ansprüche

1. Kastenförmiger Servierwagen (1), insbesondere Servierwagen für Verkehrsflugzeuge, Eisenbahnen oder Schiffe mit einer tablettartig gestalteten oberen Ablagefläche (2) und/oder mit einer herausziehbaren Tischplatte (5), wobei die tablettartige Ablagefläche bzw. die herausziehbare Tischplatte mit einem umlaufenden Rand (3) versehen ist,
dadurch gekennzeichnet,
daß die tablettartige Ablagefläche (2) und/oder die herausziehbare Tischplatte (5) innerhalb des umlaufenden Randes (3) mit einem im drucklosen Gießverfahren kalt aufgebrachten und anschließend warm ausgehärteten Elastomer (4) beschichtet ist.

2. Servierwagen nach Anspruch 1,
dadurch gekennzeichnet,
daß der Elastomer ein Polyester-Polyurethan-Elastomer in einer Schichtdicke zwischen 0,1 bis 10 mm mit einer Shorehärte zwischen 10 - 50 shore ist.

3. Servierwagen nach Anspruch 1 oder 2,
dadurch gekennzeichnet,
daß die die Elastomerschicht (4) tragende Schicht (2, 5) metallisch ist und daß zwischen beiden Schichten ein Haftvermittler vorhanden ist.

Fig. 1

Fig. 2

Fig. 3